# EUROPEAN PATENT APPLICATION

(11) **EP 4 629 042 A1**
(43) Date of publication of application: **08.10.2025**
(21) Application number: 23896772.3
(22) Date of filing: 28.11.2023
(51) Int. Cl.: G06F 3/0481

(54) **MEDIA CONTENT DISPLAY METHOD AND APPARATUS, ELECTRONIC DEVICE, AND STORAGE MEDIUM**

(30) Priority: 29.11.2022 CN 202211518491
(71) Applicant: Beijing Zitiao Network Technology Co., Ltd., Beijing 100190 (CN)
(72) Inventor: LIU, Yang, Beijing 100028 (CN); ZHAO, Yuxuan, Beijing 100028 (CN)
(74) Representative: Marks & Clerk LLP
(86) International application number: PCT/CN2023/134671
(87) International publication number: WO 2024/114623

(57) **Abstract**

A media content display method and apparatus, an electronic device, and a storage medium. The method is applied to a first application and comprises: receiving a display operation of a first user, wherein the display operation acts on target information in a first interface, the target information comprises session information between the first user and at least one second user in the first application, the target information corresponds to target media content, and the target media content is media content published in a second application; and in response to the display operation, displaying the target media content in a first area of a second interface, wherein the area ratio of the first area is associated with the picture display area ratio of the target media content.

## Description

The present disclosure claims priority of the Chinese Patent Application No. 202211518491.X filed with the Chinese Patent Office on November 29, 2022, the entire disclosure of which is incorporated by reference in the present disclosure.

### TECHNICAL FIELD

Embodiments of the present disclosure relate to a media content display method and apparatus, an electronic device and a storage medium.

### BACKGROUND

In related art, users can share the videos they watch in the session and watch the videos shared in the session. However, the videos shared in the session are usually displayed in a single and simple way.

### SUMMARY

Embodiments of the present disclosure provide a media content display method and apparatus, an electronic device and a storage medium, so as to enrich the video display mode in sessions.

In a first aspect, an embodiment of the present disclosure provides a media content display method applied to a first application, including:
receiving a display operation of a first user, where the display operation acts on target information in a first interface, the target information includes session information in the first application between the first user and at least one second user, the target information corresponds to target media content, the target media content is media content posted in a second application, and the first application is an instant messaging application for the first user to have a session with the second user;
displaying the target media content in a first area of a second interface in response to the display operation, where the first area is configured to display an image of the target media content, and an area ratio of the first area is associated with an image display area ratio of the target media content.

In a second aspect, an embodiment of the present disclosure further provides a media content display apparatus configured in a first application, including:
an operation receiving module, configured to receive a display operation of a first user, where the display operation acts on target information in a first interface, the target information includes session information in the first application between the first user and at least one second user, the target information corresponds to target media content, the target media content is media content posted in a second application, and the first application is an instant messaging application for the first user to have a session with the second user; and
a media content display module, configured to display the target media content in a first area of a second interface in response to the display operation, where the first area is configured to display an image of the target media content, and an area ratio of the first area is associated with an image display area ratio of the target media content.

In a third aspect, an embodiment of the present disclosure further provides an electronic device, including:
one or more processors; and
a memory storing one or more programs, where
the one or more programs, when executed by the one or more processors, cause the one or more processors to implement the media content display method described in the embodiment of the present disclosure.

In a fourth aspect, an embodiment of the present disclosure further provides a computer-readable storage medium on which a computer program is stored, where the computer program, when executed by a processor, implements the media content display method described in the embodiment of the present disclosure.

### BRIEF DESCRIPTION OF DRAWINGS

The above and other features, advantages and aspects of embodiments of the present disclosure will become more apparent by referring to the following detailed description when taken in conjunction with the accompanying drawings. Throughout the drawings, the same or similar reference numerals indicate the same or similar elements. It should be understood that the drawings are schematic, and the components and elements are not necessarily drawn to scale.
Fig. 1 is a flowchart of a media content display method provided by an embodiment of the present disclosure;
Fig. 2 is a schematic display diagram of a first interface provided by an embodiment of the present disclosure;
Fig. 3 is a schematic display diagram of a second interface provided by an embodiment of the present disclosure;
Fig. 4 is a schematic display diagram of another second interface provided by an embodiment of the present disclosure;
Fig. 5 is a flowchart of another media content display method provided by an embodiment of the present disclosure;
Fig. 6 is a schematic display diagram of yet another second interface provided by an embodiment of the present disclosure;
Fig. 7 is a structural block diagram of a media content display apparatus provided by an embodiment of the present disclosure; and
Fig. 8 is a schematic structural diagram of an electronic device provided by an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be embodied in various forms and should not be construed as limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "including/comprising" and its variants are open-ended inclusions, that is, "including/comprising but not limited to". The term "based on" is "at least partially based on". The term "one embodiment" means "at least one embodiment"; the term "another embodiment" means "at least one other embodiment"; the term "some embodiments" means "at least some embodiments". Related definitions of other terms will be given in the following description.

It should be noted that the concepts of "first" and "second" mentioned in the present disclosure are only used to distinguish different devices, modules or units, and are not used to limit the order or interdependence of the functions performed by these devices, modules or units.

It should be noted that the modifications of "a/an" and "a plurality" mentioned in the present disclosure are schematic rather than limitative, and those skilled in the art should understand that unless the context clearly indicates otherwise, they should be understood as "one or more".

Names of messages or information exchanged among multiple devices in the embodiments of the present disclosure are only used for illustrative purposes, and are not used to limit the scope of these messages or information.

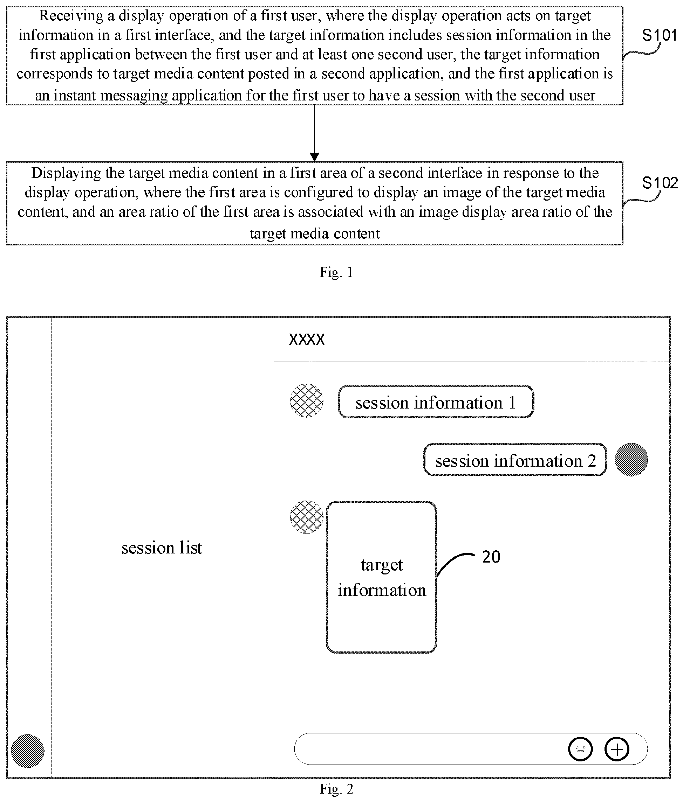

Fig. 1 is a flowchart of a media content display method provided by an embodiment of the present disclosure. The method can be executed by a media content display apparatus, where the apparatus can be realized by software and/or hardware, and can be configured in an electronic device, for example, a computer. The media content display method provided by the embodiment of the present disclosure can be applied to a first application, and is suitable for scenes of watching media content shared in the form of session information or work information in the first application. As shown in Fig. 1, the media content display method provided by this embodiment may include:
S101, receiving a display operation of a first user, where the display operation acts on target information in a first interface, and the target information includes session information in the first application between the first user and at least one second user, the target information corresponds to target media content posted in a second application, and the first application is an instant messaging application for the first user to have a session with the second user.

Among them, the first application can be considered as an application that executes the media content display method provided in this embodiment. The first application can be an instant messaging application, that is, an application for users to conduct instant messaging, which can be used for a first user to have a session with a second user. The first user can be understood as the current user, that is, the user currently performing the display operation, and can be any user using the first application. The second user may be a user who uses the first application other than the first user, such as a user who has a session with the first user and/or a user who is in the same session group with the first user. The first interface can be an information display interface in the first application, such as an interface for displaying session information and/or an interface for displaying update information posted by friends.

The information display operation may be a trigger operation for instructing to display the media content corresponding to the target information, such as the operation of triggering the session information or work information in the first interface corresponding to the media content. The target information can be considered as the information on which the information display operation is act. The target information is displayed in the first interface and may have corresponding media content. For example, when the first interface is a session interface, the target information may be the session information in the first interface that users share certain media content to the session interface; when the first interface is an update information display interface, the target information can be the work information of the target media content. For example, users can share the work information of certain target media content as their own update information in the form of update information. In such case, optionally, the target information also includes the work information of the target media content. The work information may be the work information of the target media content in the second application, such as the name of the target media content as well as the poster information and/or background audio information (such as background music information) of the media content in the second application. The poster information can be understood as the information of the poster of the target media content in the second application, such as the avatar and/or nickname of the poster of the target media content.

The target media content may be the media content corresponding to the target information, which media content may be the media content having been posted in the second application, such as video content, graphic content or image content posted in the second application, etc. This embodiment does not limit the type of the target media content. The graphic content can be media content composed of at least one image and characters, such as media content in which multiple images are displayed and switched in a preset order and characters are displayed on the images at the same time. The second application may be any type of application. The first application and the second application can be application programs on different types of terminals, for example, the first application is an instant messaging application on the computer side, and the second application is a video application on the mobile phone side.

For example, when a user (such as the first user or the second user) watches media content in the second application, the media content can be shared into one or more sessions in the first application in the form of session information, as shown in Fig. 2. Therefore, the user (such as the first user) in the session can view the relevant information of the media content contained in the session information in the session interface of the session, and can perform a display operation for the media content when he wants to watch the media content, such as triggering the session information corresponding to the media content (such as the target information 20 shown in Fig. 2). Accordingly, when the first application detects that a user triggers the session information, it can take the user as the first user and determine that it has received the display operation of the first user. Here, the related information may include, for example, the name of the media content as well as the poster information and/or background audio information of the media content in the second application.

Alternatively, when a user (such as the first user or the second user) watches the media content in the second application, the work information of the media content can be shared into the first application in the form of update information, for example, the user shares the work information of the media content as his own personal update information. Therefore, the user or a friend of the user (in the case where this personal update of the user is visible to friends) can view the work information of the media content shared by the user in the update information display page, and can perform a display operation for the media content, such as triggering the work information of the media content, if it's desired to watch the media content. Accordingly, when the first application detects that a user triggers certain work information displayed in the update information display page, it can take the user as the first user and determine that the display operation of the first user is received. Here, the update information display page can be, for example, an update information list page for displaying update information of different users, such as a moments page; or, a personal update information page for displaying various update information of a certain user, such as the personal update information page of the user in the first application.

S102, displaying the target media content in a first area of a second interface in response to the display operation, where the first area is configured to display the image of the target media content, and an area ratio of the first area is associated with an image display area ratio of the target media content.

Among them, the second interface may be an interface in the first application, which may be different from the first interface. The second interface can be configured to display the target media content corresponding to the target information triggered by the first user in the first application. The first area may be an area in the second interface for displaying the image of the target media content, and the area ratio of the first area may be associated with the image display area ratio of the target media content in the second application, where the image display area ratio may correspond to the image ratio of the target media content, or the image display area ratio may be adapted to the screen ratio of the terminal of the second application. For example, the area ratio of the first area may be equal to the image display area ratio of the target media content. For example, when the aspect ratio of the image of the target media content is smaller than 1, the first area can be a preset area with the same aspect ratio; when the aspect ratio of the image of the target media content is greater than or equal to 1, the first area can be a preset area with the same aspect ratio. For example, the image display area ratio corresponds to the image ratio of the target media content. When the target media content is switched, the ratio of the first area can change in real time with the image display area ratio of the target media content. When the current media content displayed in the first area is switched, the ratio of the first area can change in real time with the image display area ratio of the current media content.

In this embodiment, when a display operation of the first user acting in the first interface is received, the area ratio of the first area can be determined according to the image display area ratio of the displayed target media content indicated by the display operation in response to the display operation, and the first area can be displayed in the second interface by using the area ratio, and the target media content can be displayed in the first area, and the first interface can be kept in the display state when the second interface is displayed, that is, the first interface is not closed but is covered by the displayed second interface.

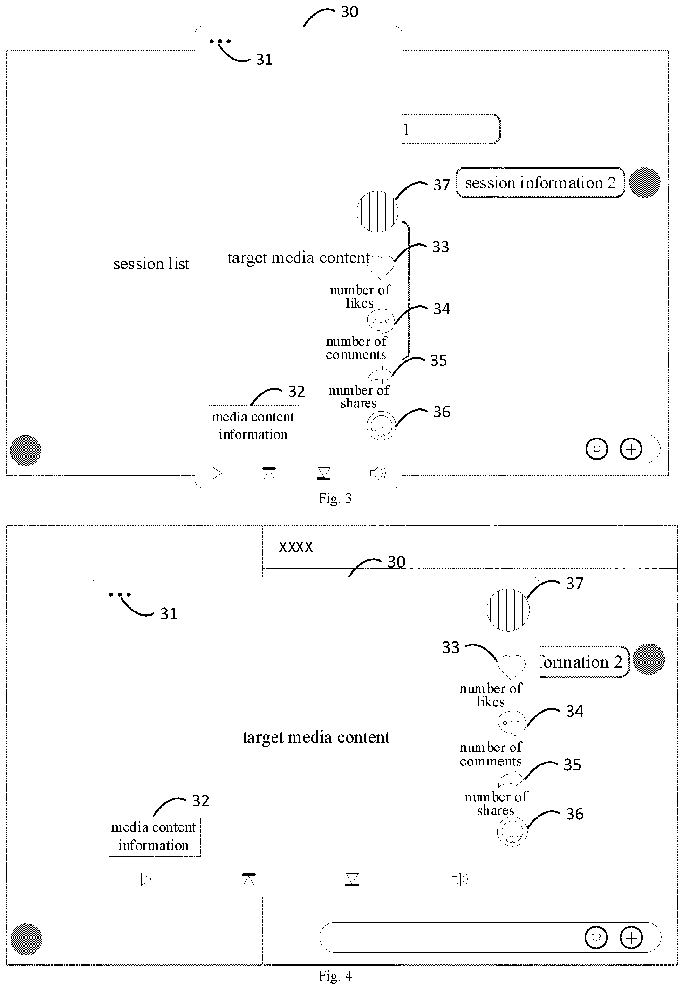

For example, when the aspect ratio of the image of the target media content is smaller than 1, that is, when the target media content is portrait mode media content, the target media content can be displayed in the first area 30 (that is, the portrait mode display area) with the aspect ratio smaller than 1 in the first interface, as shown in Fig. 3; when the aspect ratio of the image of the target media content is greater than or equal to 1, that is, when the target media content is landscape mode media content, the target media content can be displayed in the first area 30 (that is, the landscape mode display area) with the aspect ratio greater than or equal to 1 in the first interface, as shown in Fig. 4. In the following, description is given with reference to the case where the target media content is portrait mode media content and the first area 30 is a portrait mode display area, by way of example.

In addition, when a trigger operation for instructing to display the media content that has not been posted in the first interface is received, the media content can be directly displayed in the first interface; the media content can also be displayed in the media content display area of the second interface, and at this time, the area ratio of the media content display area can be a preset ratio or associated with the image display area ratio (such as the image ratio) of the media content, which is not limited in this embodiment.

As shown in Fig. 3 and Fig. 4, a play control area can also be displayed below the first area, for controlling the currently played media content; for example, controls such as progress control and volume control may be displayed in the play control area for users to control the currently played media content in the first area through various controls.

In this embodiment, the first interface and the second interface can be different interfaces, and their relative position relationship can be adjusted. For example, the second interface can be adjusted to at least partially cover the first interface, or can be adjusted to not cover the first interface, according to actual demands; alternatively, the second interface can be adjusted to be at least partially covered by the first interface, and so on. In such case, optionally, the media content display method provided by this embodiment further includes adjusting the relative positional relationship between the first interface and the second interface in response to a position adjustment operation. The position adjustment operation can be a trigger operation for instructing to adjust the relative positional relationship between the first interface and the second interface, such as a drag operation or a preset click-on operation for the second interface. The relative positional relationship may include, for example, the positional relationship between the first interface and the second interface in the screen and/or the hierarchical relationship between the layer where the first interface is located and the layer where the second interface is located.

In some embodiments, after displaying the target media content in the first area of the second interface, the method further includes: in response to a full-screen display operation for the target media content, increasing the interface size of the second interface and the area size of the first area according to the screen size; or, in response to the full-screen display operation for the target media content, increasing the interface size of the second interface and the area size of the first area according to the screen size, and displaying, in the first interface, a comment panel and/or a personal panel for the target media content.

Among them, the full-screen display operation may be a trigger operation for instructing to display the target media content in a full-screen mode in the screen, such as an operation of triggering a full-screen display control corresponding to the target media content. The comment panel for the target media content may be a panel for displaying the comment content for the target media content in the second application. The personal panel for the target media content may be a panel for displaying at least part of the personal page content of the poster of the target media content in the second application.

In the above embodiment, when a full-screen display operation for the target media content is received, the interface size of the first interface and the area size of the first area may be increased only according to the screen size of the current electronic device, without displaying the comment panel and/or personal panel for the target media content.

For example, if the comment panel and the personal panel for the target media content are not displayed in the second interface before the full-screen display operation is received, the comment panel and the personal panel can be kept from being displayed, and the interface size of the first interface and the area size of the first area can be increased according to the screen size of the current electronic device; if the comment panel and/or personal panel for the target media content are displayed in the second interface before the full-screen display operation is received, the comment panel and/or personal panel can be collapsed, that is, not to display them in the second interface, and the interface size of the first interface and the area size of the first area can be increased according to the screen size of the current electronic device.

In the above embodiment, when the full-screen display operation for the target media content is received, for example, when it's detected that the first user triggers a full-screen display control 31 displayed in the first area (as shown in Figs. 3 and 4), in addition to increasing the interface size of the first interface and the area size of the first area according to the screen size of the current electronic device, the comment panel and/or personal panel for the target media content can be further displayed, so as to facilitate the user to view the comment content for the target media content in the second application or the personal homepage content of a target poster in the second application.

For example, if the comment panel and the personal panel for the target media content are displayed in the second interface before the full-screen display operation is received, the comment panel and the personal panel can be kept displayed, and the interface size of the first interface, the area size of the first area and the size of the area where the comment panel and/or the personal panel are located in the first interface can be increased according to the screen size of the current electronic device; if the comment panel and/or personal panel for the target media content are not displayed in the second interface before the full-screen display operation is received, the interface size of the first interface and the area size of the second area can be increased according to the screen size of the current electronic device, and the comment panel and/or personal panel can be displayed in the second interface, for example, before, after or during the increase of the interface size of the first interface and the area size of the second area.

In this embodiment, in the case that a full-screen display operation for the target media content is received, it's possible to either display or not display the comment panel and/or the personal panel for the target media content in the second interface regardless of the image display area ratio of the target media content and/or the screen ratio of the current electronic device, and it is also possible to consider the image display area ratio of the target media content and/or the screen ratio of the current electronic device and display the comment panel and/or personal panel for the target media content in the second interface only when more display space is remained on the screen after the target media content is displayed in full-screen mode, for example, when the aspect ratio of the target media content is smaller than 1 and the aspect ratio of the screen of the current electronic device is greater than or equal to 1. In this way, it facilitates users to view the comment content for the target media content in the second application or the personal homepage content of the target poster in the second application, and improves the effective utilization rate of the visual area of the screen.

In some embodiments, the media content display method provided by the present disclosure further includes: switching the current display progress of the current media content displayed in the first area in response to a progress switching operation; and/or, switching the current media content displayed in the first area according to the arrangement order of media content in the first interface in response to a media content switching operation. The progress switching operation includes a trigger operation for a first key in the target keyboard; the media content switching operation includes at least one of a trigger operation for a switching control displayed in the second interface, a trigger operation for a second key in the target keyboard, and a scrolling operation for a mouse wheel of a target mouse; the target keyboard and the target mouse are in communicative connection with the current electronic device.

The current media content may be the media content currently displayed in the first area. The current display progress can be the current display progress of the current media content. The progress switching operation may be a trigger operation for instructing to switch the current display progress of the current media content. For example, the progress switching operation may include a trigger operation for the first key in the target keyboard, such as the operation of clicking on the first key. The media content switching operation may be a trigger operation for instructing to switch the current media content displayed in the first area. For example, the media content switching operation may include a trigger operation acting on a switching control displayed in the second interface, a trigger operation for the second key in the target keyboard, and/or a scrolling operation for the mouse wheel of the target mouse.

Among them, the switching control can be a control displayed in the second interface for triggering the switching of the current media content in the first area, and the switching control can be displayed in the first area or outside the first area. When displayed in the first area, the switching control can be displayed permanently, or displayed when an input indicator (such as cursor) of the current electronic device moves into the first area; when displayed outside the first area, for example, the switching control can be displayed in the play control area of the second interface. The target keyboard can be a keyboard that has established communicative connection with the current electronic device. The first key can be a control in the target keyboard for triggering the execution of the progress switching operation. The second key may be a key in the target keyboard for triggering the execution of the media content switching operation. The first key and the second key can be different keys in the target keyboard. For example, the first key can include left and right arrow keys in the target keyboard, and the second key can include up and down arrow keys in the target keyboard. The first key and the second key can also be the same key in the target keyboard. In such case, the trigger modes corresponding to the progress switching operation and the media content switching operation can be different. The target mouse can be a mouse that has established communicative connection with the current electronic device.

In the above embodiment, based on the progress switching operation/media content switching operation of the first user, the display progress of the current media content in the first area can be adjusted, or, the current media content displayed in the first area can be switched.

For example, when it is detected that the first user triggers the left arrow key/right arrow key in the first keypad, it can be determined that the progress switching operation is received, and the current display progress of the target media content can be adjusted forward/backward by a preset time duration in response to the progress switching operation.

When it is detected that the first user triggers the previous media content control/next media content control displayed in the first interface by a touching operation or by means of the left button of the target mouse, or when it's detected that the first user triggers the up arrow key/down arrow key in the target keyboard or scrolls the mouse wheel of the target mouse forward/backward, the current media content can be switched to the previous media content/next media content in the arrangement order of various media content in the first interface according to the arrangement order.

In the above embodiment, the user can realize the switching of the current display progress of the current media content in the first area and/or the switching of the current media content through the mouse or keyboard, which can enrich the play control mode of the media content in the first interface and simplify the operation required for switching the current display progress of the current media content or switching the current media content.

In the media content display method provided by this embodiment, a display operation of a first user is received, where the display operation acts on target information in a first interface, the target information includes session information in a first application between the first user and at least one second user, and the target information corresponds to target media content, which is media content posted in a second application, and the first application is an instant messaging application for the first user to have a session with the second user; in response to the display operation, the target media content is displayed in a first area of the second interface, where the first area is configured to display an image of the target media content, and the area ratio of the first area is associated with the image display area ratio of the target media content. In this embodiment, with the above technical solution, the media content shared in the first interface is displayed in the second interface by using the area whose area ratio is associated with the image display area ratio of the target media content, which not only enriches the display mode of the media content shared from other applications to the current application, but also reduces the occupation of the second interface in the visual area of the screen under the circumstance that the display size of the media content remains unchanged, thereby reducing the occlusion of the second interface to other content displayed in the screen.

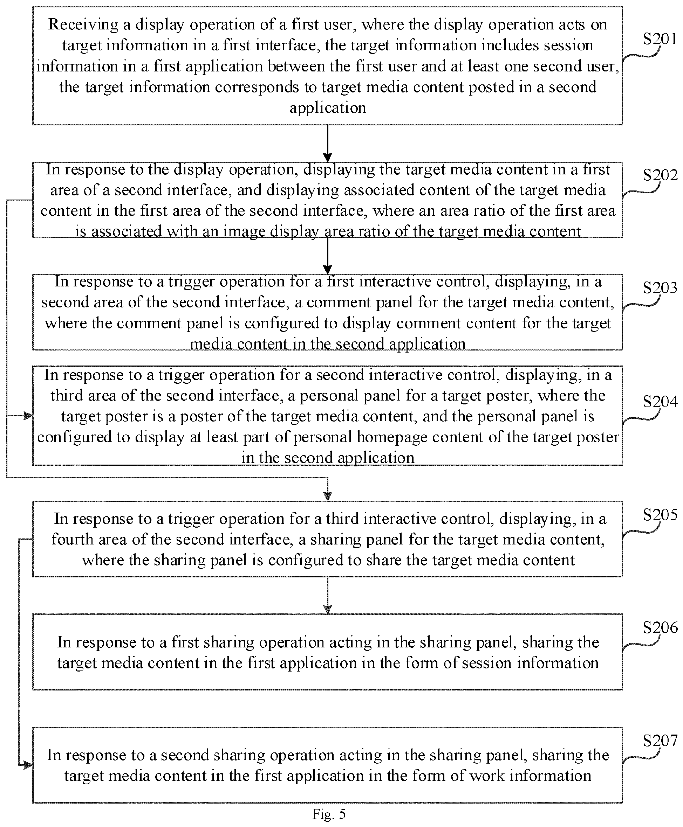

Fig. 5 is a flowchart of another media content display method provided by an embodiment of the present disclosure. The solution in this embodiment can be combined with one or more alternatives in the above embodiment. Optionally, the media content display method provided by this embodiment further includes: in response to the display operation, displaying associated content of the target media content in the first area of the second interface, where the associated content includes media content information and/or at least one interactive control.

Optionally, the media content display method provided in this embodiment further includes at least one of the following: in response to a trigger operation for a first interactive control, displaying a comment panel for the target media content in a second area of the second interface, where the comment panel is configured to display the comment content for the target media content in the second application; in response to a trigger operation for a second interactive control, displaying a personal panel of a target poster in a third area of the second interface, where the target poster is the poster of the target media content, and the personal panel is configured to display at least part of personal homepage content of the target poster in the second application; in response to a trigger operation for a third interactive control, displaying a sharing panel for the target media content in a fourth area of the second interface, where the sharing panel is configured to share the target media content.

Optionally, after displaying the sharing panel for the target media content in the fourth area of the second interface, the method further includes: in response to a first sharing operation acting in the sharing panel, sharing the target media content in the first application in the form of session information; and/or, in response to a second sharing operation acting in the sharing panel, sharing the target media content in the first application in the form of work information.

Accordingly, as shown in Fig. 5, the media content display method provided by this embodiment may include:
S201, receiving a display operation of a first user, where the display operation acts on target information in a first interface, the target information includes session information in a first application between the first user and at least one second user, the target information corresponds to target media content which is posted in a second application, and the first application is an instant messaging application for the first user to have a session with the second user.
S202, in response to the display operation, displaying the target media content in a first area of a second interface, and displaying associated content of the target media content in the first area of the second interface, and executing S203, S204 or S205, where the first area is configured to display an image of the target media content, and the area ratio of the first area is associated with the image display area ratio of the target media content, and the associated content includes media content information and/or at least one interactive control.

In this embodiment, when displaying the target media content, the associated content of the target media content in the second application can be further displayed in the first area 30, for example, the media content information 32 and at least one interactive control of the target media content in the second application can be further displayed in the first area 30, as shown in Figs. 3 and 4.

The associated content of the target media content can be content associated with the target media content in the second application, such as the media content information 32 of the target media content and/or at least one interactive control of the target media content. The media content information 32 can be considered as information of the target media content, such as the name, the poster information, the posted time and/or background audio information of the target media content in the second application. The interactive control can be considered as a control for the first user to interact with the target media content, such as a like control 33, a comment control 34, a sharing control 35, a background audio detail control 36 and/or a personal panel display control 37 for the target media content (such as the avatar of the poster of the target media content).

Therefore, the user can like the target media content by triggering the like control 33 of the target media content, and at this time, the number of likes of the target media content in the second application will be correspondingly increased by 1; the user can instruct the first application to display the comment panel/personal panel for the target media content by triggering the comment control 34/personal panel display control 37 of the target media content, so as to view the comment content for the target media content in the second application/the personal homepage content of the target poster in the second application, and/or to comment on the target media content/interact with the target poster; the user can instruct the first application to display the sharing panel for the target media content by triggering the sharing control 35 of the target media content to share the target media content; and/or the user can view the detailed information of the background audio of the target media content in the second application by triggering the background audio detail control 36 of the target media content.

In this embodiment, optionally, a first layout mode for displaying the associated content in the first area corresponds to a second layout mode for displaying the associated content in the second application, which further enriches the display mode of the target media content and facilitates users to view the associated content of the target media content or interact with the target media content.

For example, the associated content of the target media content can be displayed in the first area in a first layout mode corresponding to a second layout mode used for displaying in the second application. The first layout mode can be the layout mode adopted when the associated content of the target media content is displayed in the first application; and the second layout mode may be the layout mode adopted when the associated content of the target media content is displayed in the second application. The correspondence between the first layout mode and the second layout mode can be understood as the correspondence of display position and/or arrangement order. If the media content information of the target media content, when displayed in the second application, is displayed in the lower left corner of the media content display interface of the second application, the media content information of the target media content can be displayed in the lower left corner of the first area. If the interactive controls of the target media content, when displayed in the second application, are displayed on the right side of the media content display interface of the second application, the media content information of the target media content can be displayed on the right side of the first area, and the arrangement order of the interactive controls can be the same as that when they are displayed in the media content display interface of the second application.

S203, in response to a trigger operation for a first interactive control, displaying, in a second area of the second interface, a comment panel for the target media content, where the comment panel is configured to display the comment content for the target media content in the second application.

The first interactive control can be an interactive control for instructing to display a comment panel for the target media content, such as a comment control of the target media content. The comment panel may be a panel for displaying the comment content for the target media content in the second application, and the comment panel may be further used for the first user to post new comments on the target media content in the second application. The second area may be an area in the second interface for displaying the comment panel for the target media content.

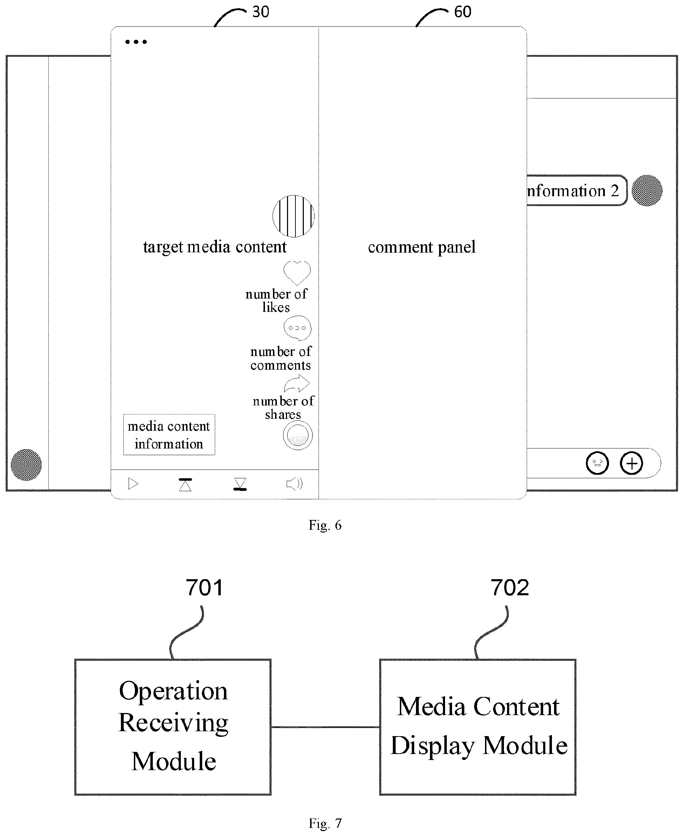

Specifically, when the first application detects that the first user triggers the first interactive control, it can display the comment panel for the target media content in the second area 60 of the second interface, as shown in Fig. 6, and display, in the comment panel, the comment content for the target media content in the second application.

Therefore, the first user can view, in the comment panel, the comment content for the target media content in the second application, and can post new comments on the target media content in the second application by posting comments in the comment panel.

S204, in response to a trigger operation for a second interactive control, displaying, in a third area of the second interface, a personal panel for a target poster, where the target poster is the poster of the target media content, and the personal panel is configured to display at least part of the personal homepage content of the target poster in the second application.

The second interactive control can be an interactive control for instructing to display the personal panel for the target poster, such as a personal panel display control of the target media content. The personal panel may be a panel for displaying at least part of the personal homepage content of the target poster in the second application. The target poster can be considered as the poster of the target media content. The personal homepage content can be understood as the page content of the personal homepage of the target poster in the second application. For example, the personal homepage content can include a media content list of the media content posted by the target poster in the second application, and/or information such as the target poster's avatar, nickname, number of fans and/or follow control in the second application. The follow control can be configured to trigger following the target poster in the second application. The third area may be the area in the second interface for displaying the personal panel for the target media content, and may be the same as or different from the second area.

Specifically, when the first application detects that the first user triggers the second interactive control, it can display the personal panel for the target media content in the third area of the second interface, and display, in the personal panel, at least part of the personal homepage content of the target poster in the second application.

Therefore, the first user can view, in the personal panel, the personal homepage content of the target poster in the second application, and can perform corresponding interactive operations in the personal panel, such as instructing the first application to play, in the first area, media content corresponding to a certain media content identifier displayed in the personal panel by triggering the media content identifier, and/or, following the target poster in the second application by triggering the follow control of the target poster, and so on.

In this embodiment, when the second interface is initially displayed, it may include the first area but not include an additional area. Therefore, when a trigger operation acting on the associated content of the target media content is received, for example, when it is detected that the user triggers the first interactive control and/or the second interactive control of the target media content, the display area of the second interface can be increased, and an additional area for displaying the second interface can be added at an associated position of the first area. In such case, optionally, the media content display method provided by this embodiment further includes: in response to the trigger operation acting on the associated content, increasing the display area of the second interface, and displaying an additional area of the second interface at the associated position of the first area, so as to display the comment panel and/or personal panel for the target media content in the additional area. The additional area can be connected with the first area; in other words, there can be overlapping boundaries between the additional area and the first area.

Here, the way to increase the display area of the second interface can be flexibly set. For example, the area size of the first area can be kept unchanged and the interface size of the second interface can be increased, such as increasing the interface size of the second interface to the left or right, so as to create an additional area in the second interface. In such case, optionally, increasing the display area of the second interface includes: keeping the area size of the first area unchanged and increasing the interface size of the second interface to create an additional area of the second interface in the second interface.

In this embodiment, the additional area of the second interface may overlap with the first area or may be located outside the first area. Optionally, the additional area is located outside the first area, and the additional area includes the second area and/or the third area. That is, the second area and/or the third area can be located outside the first area to avoid blocking the image of the target media content when displaying the comment panel and/or personal panel for the target media content.

In the case where the additional area is already displayed in the second interface, when the current media content displayed in the second interface is switched, the additional area can be kept displayed or the display of the additional area can be cancelled. Optionally, in the case that the current media content displayed in the first area is switched, if a preset switching condition is satisfied, the additional area is permanently displayed, where the preset switching condition is associated with the type of the current media content before and after switching.

For example, when the type of the current media content before and after switching satisfies a preset condition, an additional area of the second interface can be kept displayed in the second interface. The preset condition can be set as required. For example, the preset condition can be set such that the current media content is of the first type before and after switching, that is, if the current media content displayed in the first area before and after switching are both of the first type, the additional area of the second interface can be kept displayed when the current media content is switched, and the comment panel/personal panel displayed in the additional area of the second interface can be switched to the comment panel/personal panel corresponding to the current media content after switching.

Accordingly, when the type of the current media content before and after switching does not satisfy the preset condition, for example, when the current media content is switched from the first type of media content to the second type of media content, the display of the additional area in the second interface can be cancelled. In such case, optionally, the media content display method provided by this embodiment may further include: in response to the current media content displayed in the first area being switched from the first type of media content to the second type of media content, canceling display of the additional area. It can be understood that when the display of the additional area of the second interface is cancelled, the display of the comment panel and personal panel for the current media content will also be cancelled.

The first type of media content and the second type of media content can be different types of media content, for example, the first type of media content can be media content posted in a second application, and the second type of media content may be media content that has not been posted in the second application, such as media content that has not been posted.

S205, in response to a trigger operation for a third interactive control, displaying a sharing panel for the target media content in a fourth area of the second interface, and executing S206 or S207, where the sharing panel is configured to share the target media content.

The third interactive control can be an interactive control for instructing to display the sharing panel for the target media content, such as the sharing control of the target media content. The sharing panel may be a panel for the first user to share the target media content, and one or more sharing controls may be displayed in the sharing panel. The fourth area may be an area in the second interface for displaying the sharing panel for the target media content, and may or may not overlap with the first area. Optionally, the fourth area may at least partially overlap with the first area, for example, the fourth area may be located within the first area.

Specifically, when the first application detects that the first user triggers the third interactive control, it can display the sharing panel for the target media content in the fourth area of the second interface, for the first user to share the target media content.

S206, in response to a first sharing operation acting in the sharing panel, sharing the target media content in the first application in the form of session information.

The first sharing operation can be a trigger operation for instructing to share the target media content in the form of session information, such as triggering a sharing control in the sharing panel corresponding to a certain session. This session can be a session between the first user and a certain second user, or a session corresponding to a session group to which the first user belongs.

Specifically, when the first sharing operation acting in the sharing panel is received, the target media content can be shared in the first application in the form of session information. For example, when it is detected that a user triggers a sharing control corresponding to a certain session, the target media content can be shared in this session in the form of session information.

S207, in response to a second sharing operation acting in the sharing panel, sharing the target media content in the first application in the form of work information.

The second sharing operation may be a trigger operation for instructing to share the target media content in the form of work information, such as an operation of triggering a preset sharing control in the sharing panel.

Specifically, when the second sharing operation acting in the sharing panel is received, the target media content can be shared in the first application in the form of work information. For example, when it is detected that a user triggers a preset sharing control in the sharing panel, the target media content can be shared as the personal update information of the first user in the first application in the form of work information.

It can be understood that when other sharing operations (such as a third sharing operation) acting in the sharing panel are received, the target media content can be shared to other applications corresponding to the other sharing operations, that is, the first user can also share the target media content to other applications by performing the sharing operations. This other application can be considered as an application other than the first application. For example, this other application can include the second application and/or a third application different from the second application, which is not limited in this embodiment.

In addition, after sharing the target media content, the sharing panel can be kept displayed, so that the first user can continue to share the target media content; it is also possible to cancel the display of the sharing panel, so as to facilitate the first user to watch the image of the target media content.

The media content display method provided by this embodiment can further enrich the interactive mode of the target media content shared in the first application and satisfy different interactive requirements of users.

Fig. 7 is a structural block diagram of a media content display apparatus provided by an embodiment of the present disclosure. The apparatus can be implemented by software and/or hardware, and can be configured in a first application of an electronic device, for example, in a first application of a computer. The media content shared in the first application in the form of session information or work information can be displayed when the apparatus executes the media content display method. As shown in Fig. 7, the media content display apparatus provided by this embodiment may include an operation receiving module 701 and a media content display module 702.

The operation receiving module 701 is configured to receive a display operation of a first user, where the display operation acts on target information in a first interface, and the target information includes session information in the first application between the first user and at least one second user, and the target information corresponds to target media content posted in a second application, and the first application is an instant messaging application for the first user to have a session with the second user.

The media content display module 702 is configured to display the target media content in a first area of a second interface in response to the display operation, where the first area is configured to display an image of the target media content, and an area ratio of the first area is associated with an image display area ratio of the target media content.

In the media content display apparatus provided by this embodiment, a display operation of a first user is received through an operation receiving module, where the display operation acts on target information in a first interface, the target information includes session information in the first application between the first user and at least one second user, and the target information corresponds to target media content which is media content posted in a second application, and the first application is an instant messaging application for the first user to have a session with the second user; in response to the display operation, the target media content is displayed in a first area of the second interface through the media content display module, where the first area is configured to display an image of the target media content, and an area ratio of the first area is associated with an image display area ratio of the target media content. In this embodiment, with the above technical solution, the media content shared in the first interface is displayed in the second interface by using an area whose area ratio is associated with the image display area ratio of the target media content, which not only enriches the display mode of the media content shared from other applications to the current application, but also reduces the occupation of the second interface in the visual area of the screen under the circumstance that the display size of the media content remains unchanged, thereby reducing the occlusion of the second interface to other content displayed in the screen.

In the above technical solution, the media content display module 702 can also be configured to display associated content of the target media content in the first area of the second interface in response to the display operation, where the associated content includes media content information and/or at least one interactive control.

In the above solution, a first layout mode for displaying the associated content in the first area may correspond to a second layout mode for displaying the associated content in the second application.

Further, the media content display apparatus provided by this embodiment may include at least one of the following: a comment panel display module, configured to display a comment panel for the target media content in a second area of the second interface in response to a trigger operation for a first interactive control, where the comment panel is configured to display comment content for the target media content in the second application; a personal panel display module, configured to display a personal panel for a target poster in a third area of the second interface in response to a trigger operation for a second interactive control, where the target poster is a poster of the target media content, and the personal panel is configured to display at least part of personal homepage content of the target poster in the second application; a sharing panel display module, configured to display a sharing panel for the target media content in a fourth area of the second interface in response to a trigger operation for a third interactive control, where the sharing panel is configured to share the target media content.

Further, the media content display apparatus provided by this embodiment may further include an additional area display module, configured to increase a display area of the second interface and display an additional area of the second interface at an associated position of the first area in response to a trigger operation acting on the associated content.

In the above solution, the additional area may be located outside the first area, and the additional area may include the second area and/or the third area.

In the above solution, in the case that the current media content displayed in the first area is switched, if a preset switching condition is satisfied, the additional area can be permanently displayed, where the preset switching condition is associated with the type of the current media content before and after switching.

Further, the media content display apparatus provided by this embodiment may further include a display canceling module, which is configured to cancel the display of the additional area when the current media content displayed in the first area is switched from the first type of media content to the second type of media content.

In the above solution, the additional area display module can be configured to keep an area size of the first area unchanged and increase an interface size of the second interface, to create an additional area of the second interface in the second interface.

In the above solution, the fourth area may at least partially overlap with the first area.

Further, the media content display apparatus provided by this embodiment may further include: a first sharing module, configured to share the target media content in the first application in the form of session information in response to a first sharing operation acting in the sharing panel after the sharing panel for the target media content is displayed in the fourth area of the second interface; and/or, a second sharing module, configured to share the target media content in the first application in the form of work information in response to a second sharing operation acting in the sharing panel after the sharing panel for the target media content is displayed in the fourth area of the second interface.

Further, the media content display apparatus provided by this embodiment may further include a full-screen display module, which is configured to increase the interface size of the second interface and the area size of the first area according to a screen size, in response to a full-screen display operation for the target media content after the target media content is displayed in the first area of the second interface; or the full-screen display module is configured to increase the interface size of the second interface and the area size of the first area according to the screen size and display the comment panel and/or personal panel for the target media content in the first interface, in response to the full-screen display operation for the target media content after the target media content is displayed in the first area of the second interface.

Further, the media content display apparatus provided by this embodiment may further include: a progress switching module, configured to switch a current display progress of current media content displayed in the first area in response to a progress switching operation; and/or, a media content switching module, configured to switch the current media content displayed in the first area according to an arrangement order of media content in the first interface in response to a media content switching operation; where the progress switching operation includes a trigger operation for a first key in a target keyboard; the media content switching operation includes at least one of: a trigger operation for a switching control displayed in the second interface, a trigger operation for a second key in the target keyboard, and a scrolling operation on a mouse wheel of a target mouse; the target keyboard and the target mouse are in communicative connection with the current electronic device.

Further, the media content display apparatus provided by this embodiment may further include: a position adjustment module, configured to adjust a relative positional relationship between the first interface and the second interface in response to a position adjustment operation.

In the above solution, the target information may further include work information of the target media content.

The media content display apparatus provided by the embodiment of the present disclosure can execute the media content display method provided by any embodiment of the present disclosure, and has corresponding functional modules and beneficial effects. For technical details not described in detail in this embodiment, reference can be made to the media content display method provided by any embodiment of the present disclosure.

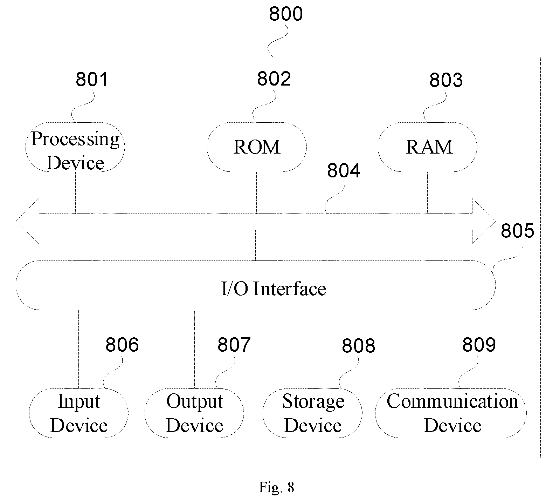

Reference is now made to Fig. 8, which shows a schematic structural diagram of an electronic device (e.g., a terminal device) 800 suitable for implementing the embodiments of the present disclosure. The terminal device in the embodiment of the present disclosure may include, but is not limited to, mobile terminals such as mobile phone, notebook computer, digital broadcast receiver, PDA (Personal Digital Assistant), PAD (Tablet Computer), PMP (Portable Multimedia Player) and vehicle-mounted terminal (such as vehicle-mounted navigation terminal); and fixed terminals such as digital TV and desktop computer. The electronic device shown in Fig. 8 is only an example, and should not bring any limitation to the functions and application scope of the embodiments of the present disclosure.

As shown in Fig. 8, the electronic device 800 may include a processing device (such as a central processing unit, a graphics processor, etc.) 801, which may perform various appropriate actions and processes according to a program stored in a read-only memory (ROM) 802 or a program loaded from a storage device 808 into a random-access memory (RAM) 803. In the RAM 803, various programs and data required for the operation of the electronic device 800 are also stored. The processing device 801, the ROM 802 and the RAM 803 are connected to each other through a bus 804. An input/output (I/O) interface 805 is also connected to the bus 804.

Generally, the following devices can be connected to the I/O interface 805: an input device 806 including, for example, a touch screen, a touch pad, a keyboard, a mouse, a camera, a microphone, an accelerometer, a gyroscope, etc.; an output device 807 including, for example, a liquid crystal display (LCD), a speaker, a vibrator, etc.; the storage device 808 such as a magnetic tape and a hard disk, etc.; and a communication device 809. The communication device 809 may allow the electronic device 800 to have wireless or wired communication with other devices to exchange data. Although Fig. 8 shows an electronic device 800 with various devices, it should be understood that it is not required to implement or have all the devices as shown. More or fewer devices may alternatively be implemented or provided.

In particular, according to an embodiment of the present disclosure, the process described above with reference to the flowchart can be implemented as a computer software program. For example, an embodiment of the present disclosure includes a computer program product including a computer program carried on a non-transitory computer-readable medium, which contains program codes for executing the method shown in the flowchart. In such an embodiment, the computer program can be downloaded and installed from the network through the communication device 809, or installed from the storage device 808, or installed from the ROM 802. When the computer program is executed by the processing device 801, the above functions defined in the method of the embodiment of the present disclosure are performed.

It should be noted that the computer-readable medium mentioned above in the present disclosure can be a computer-readable signal medium or a computer-readable storage medium or any combination of the above. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some embodiments, a client and a server may communicate using any currently known or future-developed network protocol such as the hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: receive a display operation of a first user, where the display operation acts on target information in a first interface, and the target information includes session information in a first application between the first user and at least one second user, and the target information corresponds to target media content, which is media content posted in a second application; and display the target media content in a first area of a second interface in response to the display operation, where the first area is configured to display an image of the target media content, and an area ratio of the first area is associated with an image display area ratio of the target media content.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, Example 1 provides a media content display method, which is applied to a first application and includes:
receiving a display operation of a first user, where the display operation acts on target information in a first interface, the target information includes session information in a first application between the first user and at least one second user, the target information corresponds to target media content, the target media content is media content posted in a second application, and the first application is an instant messaging application for the first user to have a session with the second user; and
displaying the target media content in a first area of a second interface in response to the display operation, where the first area is configured to display an image of the target media content, and an area ratio of the first area is associated with an image display area ratio of the target media content.

According to one or more embodiments of the present disclosure, the method of Example 2 according to Example 1 further includes:
displaying, in response to the display operation, associated content of the target media content in the first area of the second interface, where the associated content includes media content information and/or at least one interactive control.

According to one or more embodiments of the present disclosure, in the method of Example 3 according to Example 2, a first layout mode for displaying the associated content in the first area corresponds to a second layout mode for displaying the associated content in the second application.

According to one or more embodiments of the present disclosure, the method of Example 4 according to Example 2 further includes at least one of the following:
in response to a trigger operation for a first interactive control, displaying a comment panel for the target media content in a second area of the second interface, where the comment panel is configured to display comment content for the target media content in the second application;
in response to a trigger operation for a second interactive control, displaying a personal panel for a target poster in a third area of the second interface, where the target poster is a poster of the target media content, and the personal panel is configured to display at least part of personal homepage content of the target poster in the second application; and
in response to a trigger operation for a third interactive control, displaying a sharing panel for the target media content in a fourth area of the second interface, where the sharing panel is configured to share the target media content.

According to one or more embodiments of the present disclosure, the method of Example 5 according to Example 4 further includes:
in response to a trigger operation acting on the associated content, increasing a display area of the second interface, and displaying an additional area of the second interface at an associated position of the first area.

According to one or more embodiments of the present disclosure, in the method of Example 6 according to Example 5, the additional area is located outside the first area, and the additional area includes the second area and/or the third area.

According to one or more embodiments of the present disclosure, in the method of Example 7 according to Example 5, under a circumstance that current media content displayed in the first area is switched, in response to satisfying a preset switching condition, permanently displaying the additional area, where the preset switching condition is associated with a type of the current media content before and after switching.

According to one or more embodiments of the present disclosure, the method of Example 8 according to Example 7 further includes:
in response to the current media content displayed in the first area being switched from first type of media content to second type of media content, cancelling a display of the additional area.

According to one or more embodiments of the present disclosure, in the method of Example 9 according to Example 5, increasing the display area of the second interface includes:
maintaining an area size of the first area unchanged, and increasing an interface size of the second interface to create the additional area of the second interface in the second interface.

According to one or more embodiments of the present disclosure, in the method of Example 10 according to Example 4, the fourth area at least partially overlaps with the first area.

According to one or more embodiments of the present disclosure, in the method of Example 11 according to Example 4, after displaying the sharing panel for the target media content in the fourth area of the second interface, further including:
in response to a first sharing operation acting in the sharing panel, sharing the target media content in the first application in the form of session information; and/or
in response to a second sharing operation acting in the sharing panel, sharing the target media content in the first application in the form of work information.

According to one or more embodiments of the present disclosure, in the method of Example 12 according to any one of Examples 1-11, after displaying the target media content in the first area of the second interface, further including:
in response to a full-screen display operation for the target media content, increasing the interface size of the second interface and the area size of the first area according to a screen size; or
in response to the full-screen display operation for the target media content, increasing the interface size of the second interface and the area size of the first area according to the screen size, and displaying the comment panel and/or personal panel for the target media content in the first interface.

According to one or more embodiments of the present disclosure, the method of Example 13 according to any one of Examples 1-11 further includes:
in response to a progress switching operation, switching a current display progress of the current media content displayed in the first area; and/or
in response to a media content switching operation, switching the current media content displayed in the first area according to an arrangement order of media content in the first interface;
where the progress switching operation includes a trigger operation for a first key in a target keyboard; the media content switching operation includes at least one of: a trigger operation for a switching control displayed in the second interface, a trigger operation for a second key in the target keyboard, and a scrolling operation on a mouse wheel of a target mouse; where the target keyboard and the target mouse are in communicative connection with the current electronic device.

According to one or more embodiments of the present disclosure, the method of Example 14 according to any one of Examples 1-11 further includes:
in response to a position adjustment operation, adjusting a relative positional relationship between the first interface and the second interface.

According to one or more embodiments of the present disclosure, in the method of Example 15 according to any one of Examples 1-11, the target information further includes work information of the target media content.

According to one or more embodiments of the present disclosure, Example 16 provides a media content display apparatus, which is configured in a first application and includes:
an operation receiving module, configured to receive a display operation of a first user, where the display operation acts on target information in a first interface, the target information includes session information in a first application between the first user and at least one second user, the target information corresponds to target media content, the target media content is media content posted in a second application, and the first application is an instant messaging application for the first user to have a session with the second user; and
a media content display module, configured to display the target media content in a first area of a second interface in response to the display operation, where the first area is configured to display an image of the target media content, and an area ratio of the first area is associated with an image display area ratio of the target media content.

According to one or more embodiments of the present disclosure, Example 17 provides an electronic device, including:
one or more processors; and
a memory for storing one or more programs, where
the one or more programs, when executed by the one or more processors, cause the one or more processors to implement the media content display method as described in any one of Examples 1-15.

According to one or more embodiments of the present disclosure, Example 18 provides a computer-readable storage medium storing a computer program thereon, where the computer program, when executed by a processor, implements the media content display method as described in any of Examples 1-15.

The above description merely refers to the preferred embodiments of the present disclosure and the explanations of technical principles as applied. It should be understood by those skilled in the art that the disclosure scope involved in the present disclosure is not limited to the technical solutions formed by the specific combination of the above technical features, but also covers other technical solutions formed by any combination of the above technical features or their equivalent features without departing from the above disclosure concept. For example, the technical solution formed by above features replaced with (but not limited to) technical features having similar functions disclosed in the present disclosure.

Furthermore, although the operations are depicted in a particular order, this should not be understood as requiring that these operations be performed in the particular order as shown or in a sequential order. Under certain circumstances, multitasking and parallel processing may be beneficial. Likewise, although several specific implementation details are contained in the above discussion, these should not be construed as limiting the scope of the present disclosure. Some features described in the context of separate embodiments can also be combined in a single embodiment. On the contrary, various features described in the context of a single embodiment can also be implemented in multiple embodiments individually or in any suitable sub-combination.

Although the subject matter has been described in language specific to structural features and/or methodological logical acts, it should be understood that the subject matter defined in the appended claims is not necessarily limited to the specific features or acts described above. On the contrary, the specific features and actions described above are only exemplary forms of implementing the claims.

## Claims

1. A media content display method applied to a first application of a first user, the method comprising:
receiving a display operation, wherein the display operation acts on target information in a first interface, the target information comprises session information in the first application between the first user and at least one second user, the target information corresponds to target media content, and the target media content is media content posted in a second application, and the first application is an instant messaging application for the first user to have a session with the second user; and
displaying the target media content in a first area of a second interface in response to the display operation, wherein the first area is configured to display an image of the target media content, and an area ratio of the first area is associated with an image display area ratio of the target media content.

2. The method according to claim **1,** further comprising:
displaying associated content of the target media content in the first area of the second interface in response to the display operation, wherein the associated content comprises media content information and/or at least one interactive control.

3. The method according to claim 2, wherein a first layout mode for displaying the associated content in the first area corresponds to a second layout mode for displaying the associated content in the second application.

4. The method according to claim 2 or 3, further comprising at least one of the following:
in response to a trigger operation for a first interactive control, displaying, in a second area of the second interface, a comment panel for the target media content, wherein the comment panel is configured to display comment content for the target media content in the second application;
in response to a trigger operation for a second interactive control, displaying, in a third area of the second interface, a personal panel for a target poster, wherein the target poster is a poster of the target media content, and the personal panel is configured to display at least part of personal homepage content of the target poster in the second application; and
in response to a trigger operation for a third interactive control, displaying, in a fourth area of the second interface, a sharing panel for the target media content, wherein the sharing panel is configured to share the target media content.

5. The method according to claim 4, further comprising:
in response to a trigger operation acting on the associated content, increasing a display area of the second interface, and displaying an additional area of the second interface at an associated position of the first area.

6. The method according to claim 5, wherein the additional area is located outside the first area, and the additional area comprises the second area and/or the third area.

7. The method according to claim 5, wherein in response to current media content displayed in the first area being switched and a preset switching condition being satisfied, permanently displaying the additional area, wherein the preset switching condition is associated with a type of the current media content before and after switching.

8. The method according to claim 7, further comprising:
in response to the current media content displayed in the first area being switched from first type of media content to second type of media content, cancelling a display of the additional area.

9. The method according to any one of claims 5-8, wherein the increasing a display area of the second interface comprises:
maintaining an area size of the first area unchanged, and increasing an interface size of the second interface, to create the additional area of the second interface in the second interface.

10. The method according to any one of claims 4-9, wherein the fourth area at least partially overlaps with the first area.

11. The method according to any one of claims 4-10, wherein after displaying, in the fourth area of the second interface, the sharing panel for the target media content, the method further comprises:
in response to a first sharing operation acting in the sharing panel, sharing the target media content in the first application in the form of session information; and/or
in response to a second sharing operation acting in the sharing panel, sharing the target media content in the first application in the form of work information.

12. The method according to any one of claims 1-11, wherein after displaying the target media content in the first area of the second interface, the method further comprises:
in response to a full-screen display operation for the target media content, increasing an interface size of the second interface and an area size of the first area according to a screen size; or
in response to the full-screen display operation for the target media content, increasing the interface size of the second interface and the area size of the first area according to the screen size, and displaying a comment panel and/or a personal panel for the target media content in the second interface.

13. The method according to any one of claims 1-12, further comprising:
in response to a progress switching operation, switching a current display progress of current media content displayed in the first area; and/or
in response to a media content switching operation, switching the current media content displayed in the first area according to an arrangement order of media content in the first interface;
wherein the progress switching operation comprises a trigger operation for a first key in a target keyboard; the media content switching operation comprises at least one of: a trigger operation acting on a switching control displayed in the second interface, a trigger operation for a second key in the target keyboard, and a scrolling operation for a mouse wheel of a target mouse; and wherein the target keyboard and the target mouse are in communicative connection with a current electronic device.

14. The method according to any one of claims 1-13, further comprising:
in response to a position adjustment operation, adjusting a relative positional relationship between the first interface and the second interface.

15. The method according to any one of claims 1-14, wherein the target information further comprises work information of the target media content.

16. A media content display apparatus configured in a first application of a first user, the apparatus comprising:
an operation receiving module, configured to receive a display operation, wherein the display operation acts on target information in a first interface, the target information comprises session information in the first application between the first user and at least one second user, and the target information corresponds to target media content, the target media content is media content posted in a second application, and the first application is an instant messaging application for the first user to have a session with the second user; and
a media content display module, configured to display the target media content in a first area of a second interface in response to the display operation, wherein the first area is configured to display an image of the target media content, and an area ratio of the first area is associated with an image display area ratio of the target media content.

17. An electronic device, comprising:
at least one processor; and
a memory communicatively connected to the at least one processor, wherein
the memory stores a computer program executable by the at least one processor, and
the computer program, upon executed by the at least one processor, causes the at least one processor to perform the media content display method according to any one of claims 1-15.

18. A computer-readable storage medium for storing computer instructions thereon, wherein the computer instructions are configured to cause a processor to perform the media content display method according to any one of claims 1-15.
